# EUROPEAN PATENT APPLICATION

(11) **EP 1 628 251 A1**
(43) Date of publication of application: **22.02.2006**
(21) Application number: 04077364.0
(22) Date of filing: 20.08.2004
(51) Int. Cl.: G06Q 10/00

(54) **Product availability check at a predetermined time.**

(71) Applicant: SAP AG, 69190 Walldorf (DE)
(72) Inventor: Wöhler, Christian, 69115 Heidelberg (DE)
(74) Representative: Winckels, Johannes Hubertus F.

(57) **Abstract**

The invention relates to a method of performing an availability check for a product to determine whether the product is available for a customer at a predetermined time. The method comprising:
providing a processor device;
storing an original forecast for a period of time up to and including the predetermined time;
determining a time integrated forecast value for the original forecast; using the time integrated forecast values in the availability check.

## Description

### Technical Field

The invention relates to a method of performing an availability check for a product to determine whether the product is available for a customer at a predetermined time and a computer system performing an availability check for a product to determine whether the product is available for a customer at a predetermined time.

### Background to the Invention and Prior Art

Availability checks for products are used in order to find out if a specified product is available for a customer on a requested date or alternatively which is the earliest availability date for the product. They are often carried out online while the customer is waiting and they should be fast as well as reliable. The reliability comprises a positive check result and also a negative result, i.e. the product is really not available on the requested date or earlier. Such availability checks are currently offered by IT-systems, such as, for example, supply chain management systems developed by SAP AG.

Conventional IT-systems provide a quotation component, which provide a method of availability checks which allows checking the availability against Demand Planning characteristic value combinations (CVC). The availability can be used in planning scenarios in which the forecast is used to plan the production. In this case it is sensible and efficient to check the availability of a finished product against the planned production.

In conventional Demand Planning scenarios the forecast is done with product independent characteristics, e.g. location, sales region or customer channel. In such scenarios the check on a specific CVC should make sure that forecast is available for all the specified characteristic values of the CVC at the time requested or on the earliest possible date. An example would be that the availability of a certain product at a specific location for a specific customer channel is confirmed only if all the criteria are met at the requested date. If e.g. the product is available for the specified customer channel but only at a different location the check nevertheless fails and a different date has to be checked.

For product dependent characteristics, or characteristics based forecasting, CBF, characteristics, the situation is different. In conventional IT-systems including a Demand Planning component, such as the SAP Advance Planner and Optimizer (SAP APO), the CBF scenario is used to forecast configurable products and the required number of components. Typical examples are cars or computers which can be produced in many different variants depending on the evaluation of their characteristics. In this case an availability check is used in order to check the availability of the configurable product with its evaluation and thus checking the availability of the relevant components required to produce the requested product.

It is useful to look at a typical example, i.e. a car model. In this conventional example, it is assumed that the car can be produced with different engines, e.g. 90 horse power (HP), 120HP, and 150HP and in different editions, e.g. standard, sport, and luxury, which determine the kind of air conditioning, radio, and seats. It is further assumed that the production of the car is forecast in daily buckets and that for the next week 100 cars are planned for each day. The distribution with respect to the 90HP, 120HP, and 150HP engines is for each day 10%, 75%, and 15% and with respect to the standard, sport, and luxury edition it is 50%, 20%, and 30%. From this, it follows using conventional characteristics based forecasting that for each day of the next week, it is planned, for example, to produce five cars with 90HP and standard edition.

As indicated above the CBF forecast is usually not used in order to actually produce the cars but instead it is used in order to determine the number of required components, e.g. air conditioning units. The actual car production is done in the Production Planning component, which is a separate software component of the IT-system, by exploding the bill of material for this car according to its forecast evaluations. If the procurement of the required relevant components is guaranteed the availability check on Demand Planning CVC is a sufficient and efficient way to check the availability of the finished product and its relevant components. However, such a check does not allow a more detailed check to see if the specified car can be actually produced on the requested date. Such detailed checks require the check of additional restrictions and resources but often they are not necessary because the forecast incorporates already implicitly all restrictions and it is known to be producible. Further, in the scenarios considered here it is intended to check availability of the finished product with respect to its components.

A problem with conventional IT-system, in particular, Demand Planning components of such convention system, is that often, the relevant components to be forecast and for which the availability should be checked depend only on the evaluation of one characteristic. In the example given above the engine as a component depends only on which characteristic value of the characteristic engine is selected and the air conditioning unit depends only on the selected edition. In these cases the check against Demand Planning CVC is too detailed and leads to more negative results than are acceptable.

For example, if an availability check is carried out in a conventional Demand Planning component for the example mentioned above, for one specific day next week the availability of the 90HP engine car with standard edition is checked. Due to previous checks on this day there are two 90HP cars available but only with luxury edition. On the day before, there remains one standard edition car but not with 90HP. For this situation the specified car is not available on the requested day and also not on the day before. However, the car producer would like to confirm the availability of the car for the requested day because the relevant components are actually available on this day: the 90HP engine is procured in time for the requested day and the air conditioning, radio and seats are ordered for the production of the day before.

It has been found that it is not important that the production of the specified car is not planned on the requested day at this point of the planning process because the actual production will be done according to the sales order of the car anyway. Instead, it is important that at the time of the availability check the car is planned to be produced and that all the relevant required components are available.

It has been found that the occurrence of such problematic situations in which the exact Demand Planning CVC is not available can be expected to be very frequent in conventional CBF scenarios. The reason for this is that the number of characteristics and characteristic values can be large resulting in a very large number of possible combinations. And even if the number of all planned finished products is large it can happen that for many evaluations the number of finished products is small. These small numbers can be quickly exhausted resulting in negative availability checks even if the required components are available at that time from other planned configurations using partly identical components.

It is further noted that the problem and solution proposed by the present invention is not limited to the use of CBF or product dependent characteristics. It is an object of the present invention to address the problem that the availability check of a CVC is not successful if all the criteria are met in the same time bucket but if there is a time bucket at which and before which all the criteria are met. Thus, it is an object of the present invention to guarantee that the reduction with respect to the confirmed criteria is done so that for following availability checks the finiteness of the respective quantities is correctly taken into account.

It is an object of the present invention to address the problems identified above with respect to conventional availability checks.

### Summary of the Invention

According to a first aspect of the invention, there is provided a method of performing an availability check for a product to determine whether the product is available for a customer at a predetermined time, the method comprising:
providing a processor device;
storing an original forecast for a period of time up to and including the predetermined time;
determining a time integrated forecast value for the original forecast;
using the time integrated forecast values in the availability check.

In this way, inaccurate negative availability check results are avoided. Thus, providing an efficient manner in which the processor device provides accurate and reliable information, without placing undue processing requirements on the processing device. The invention provides the further advantages that computer memory is saved, as well as CPU time.

According to a second aspect of the present invention, there is provided a computer system for performing an availability check for a product to determine whether the product is available for a customer at a predetermined time, the system comprising:
a processor device arranged to receive and process data relating to the product,
a storage element for storing an original forecast for a period of time up to and including the predetermined time, and
a determining module, wherein, in response to the determining module, the processor is arranged to determine a time integrated forecast value for the original forecast, and wherein, in response to a user action, the processor device is arranged to perform the availability check on the basis of the time integrated forecast values.

According to a third aspect of the present invention, there is provided an availability check apparatus for performing an availability check for a product to determine whether the product is available for a customer at a predetermined time, the apparatus comprises a storage medium having recorded therein processor readable code processable to perform the availability check, the processor readable code comprising storing code for storing an original forecast for a period of time up to and including the predetermined time, and determining code for determining a time integrated forecast value for the original forecast, wherein in response to the determining code, the apparatus is arranged to perform the availability check on the basis of the time integrated forecast values.

According to a fourth aspect of the present invention, there is provided a user terminal comprising means operable to perform the method of any of claims 1-7.

According to a fifth aspect of the present invention, there is provided a program storage device readable by a processing apparatus, said device embodying a program of instructions executable by the processor to perform the steps of any one of claims 1-7.

### Brief description of the drawings

In order that the invention may be more fully understood embodiments thereof will now be described by way of example only, with reference to the figures in which:
Figure 1 shows a block diagram of a computer that runs software for managing a supply chain; and
Figure 2 shows a flow chart showing an availability check in accordance with an embodiment of the present invention.

Like reference symbols in the various figures indicate like elements.

### Description of the Preferred embodiments

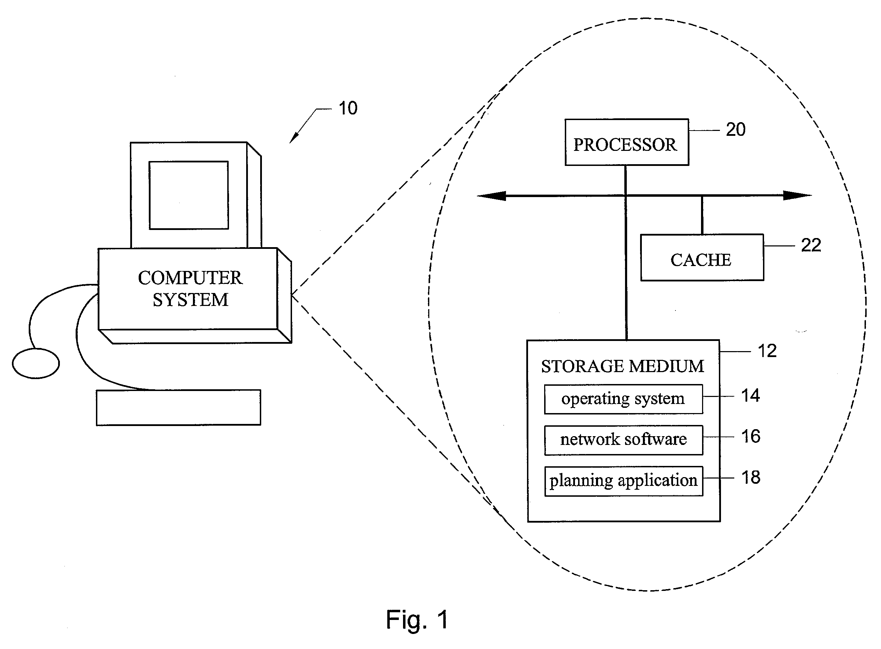

Figure 1 shows a block diagram of a computer that runs software for managing a supply chain. In particular, computer system 10 comprises a hard disk 12 that stores software, such as operating system software 14 and network software 16 for communicating over a network. The hard disc 12 also stores other software, including, but not limited to, planning application 18. In this embodiment, processor 20 executes planning application to perform the functions described. Planning application 18 comprises various software routines for use in supply chain management. To this end, planning application 18 may include a demand planning application including a modelling application. The planning application 18 uses data relating to a configurable product or products. In particular, the planning application 18 uses data relating to the product or products to model a bill of materials. The data includes the characteristics described herein below. The planning application 18 causes the processor carry out the functions described. In one embodiment, demand plans are stored as data objects in a cache 22 on computer system 10. The cache 22 may for example be the LiveCache described. The characteristics are stored in a data storage system (a database), such as hard drive 12 on computer system 10 or elsewhere. The planning application 18 causes the processor 20 to retrieve data from a data storage element 12, 22. However, the planning application 18 may cause the processor 20 to retrieve the data from any other location. The location of the data storage element is not essential and does not have to form a part of the computer system 10. In one embodiment, pointers are comprised in the data objects in the cache 22 which point to the characteristics in the data storage system. Although the data objects and characteristics are stored on the same machine in the embodiment shown, they may be stored on different machines that are connectable to each other, via, for example, a network, communications link or the like.

In accordance with one embodiment of the present invention, there is provided a computer system 10 for performing an availability check for a product to determine whether the product is available for a customer at a predetermined time, the system comprising:
a processor device arranged to receive and process data relating to the product,
a storage element for storing an original forecast for a period of time up to and including the predetermined time, and
a determining module, wherein, in response to the determining module, the processor is arranged to determine a time integrated forecast value for the original forecast, and wherein, in response to a user action, the processor device is arranged to perform the availability check on the basis of the time integrated forecast values.

With respect to the demand planning component or module of the supply chain management application, according to one embodiment of the present invention, there is provided an availability check apparatus for performing an availability check for a product to determine whether the product is available for a customer at a predetermined time, the apparatus comprises a storage medium having recorded therein processor readable code processable to perform the availability check, the processor readable code comprising storing code for storing an original forecast for a period of time up to and including the predetermined time, and determining code for determining a time integrated forecast value for the original forecast, wherein in response to the determining code, the apparatus is arranged to perform the availability check on the basis of the time integrated forecast values.

In demand planning or long term planning, characteristics and corresponding characteristic values can be used to describe in a general and flexible way the supply chain. Characteristics of different types describe different aspects of the material distribution. Some examples of characteristics include geographical aspects which are described, for example, by sales region or location, customer aspects which are described, for example, by customer group, or product aspects which are described, for example, by product family.
Characteristic value combinations CVC are a variable number of uniquely specified characteristic values, for example, sales region: USA and customer channel: internet sales. In demand planning, if all the characteristics used in the supply chain model are specified the CVC is referred to as a detailed CVC. The characteristic value combinations may be stored in the demand planner as master data.
The characteristics used to define a product are defined when setting up the supply chain model. Although it is possible to change the characteristics at a later point in time, typically, they are usually not changed later. The values however can change. For example, if a new product is introduced, and this may well lead to new CVC. The detailed CVC are master data and within a supply chain management solution, for example, a supply chain management solution provided by SAP AG, time series are assigned to the data. The master data representing the CVC describe the demand plan values in a particular format. In the particular format, it is possible to define selections. Selections are typically not detailed CVC but specify, for example, only a reduced number of characteristics and represent an aggregate of detailed CVC for the reduced number of characteristics. The aggregate being a summed value of the characteristics. Within the selected CVC the planning is consistent. This means that the demand plan values can be displayed and changed on different levels, for example, on a product group level as well as on a product or other level, and the changes are automatically propagated to the detailed CVC data. Downward propagation is called a disaggregation calculation and upward propagation is an aggregation calculation. The hierarchy with which the data are modelled is flexible and can be changed interactively by navigating through the selected data in different ways. For example, changing the number of a particular product planned in the next month for one product leads to consistent changes in the different sales regions where the product is sold; on the other hand changing the number for one sales region changes the values for the products sold there.
The characteristics described hereinabove, including the product characteristic, are called product independent characteristics.
Further characteristics called product dependent characteristics may also be defined. For example, if assembled finished products which are manufactured with components are considered, it will be appreciated that the assembled products are complex and can be manufactured in many different variants. For such configurable products, it is useful to introduce configurable products which are specified by an evaluation. The evaluation is defined by using product dependent characteristics and by specifying their values uniquely for each characteristic. Typical examples of product dependent characteristics are defined, for example, for automobiles which may have product dependent characteristics such as colour or engine size or for computers which may have product dependent characteristics such as memory size and/or hard disc, since automobiles and computers may be manufactured in many different variants. As with product independent characteristics, product dependent characteristics have a CVC, that is a variable number of uniquely specified characteristic values.

It is noted, that before providing further detailed description, that the present invention is not limited to the use of CBF or product dependent characteristics.

According to an embodiment of the present invention, the availability check is not done with the entire CVC but with respect to a specially calculated key figure. This key figure is not just copied from the original forecast but instead it contains the time integrated forecast values. This means that for a specific date it contains the sum of configurable products with their CVC which are available on the specific date and on all the dates before.

At the beginning of the planning process, i.e. before the first products are checked the values of the time integrated forecast can be calculated from the original forecast by starting with the earliest date of the forecast and adding to the values of the original forecast for any given date the values of the previous time bucket of the special key figure for each CVC separately.

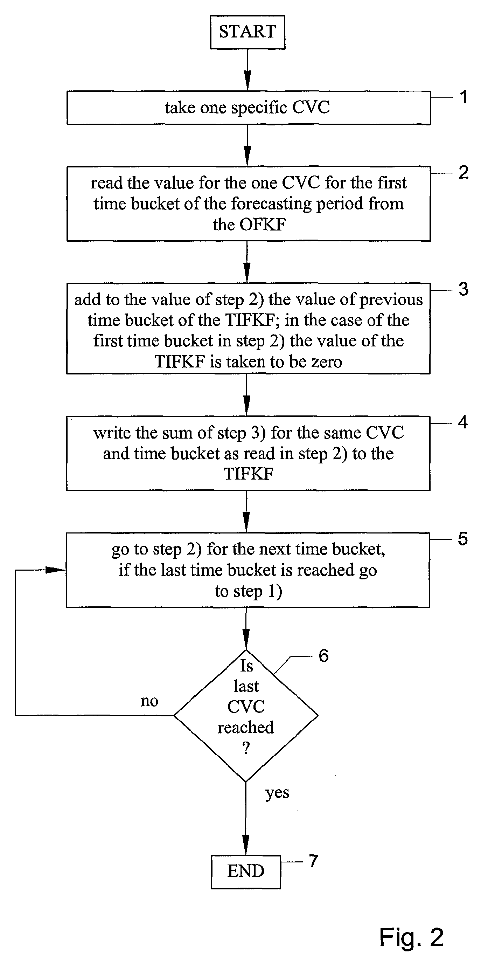

Figure 2 shows steps carried out by the processor in order to manage the supply chain to generate a demand plan in accordance with an embodiment of the present invention. In the process 30, the processor device 20 is arranged to carryout the steps of:
In further embodiments of the invention the processor may be arranged to carry out further process steps as further described.

In particular, with reference to Figure 2, the procedure carried out may comprise the following steps:
1) take one specific CVC
2) read the value for this CVC for the first time bucket of the forecasting period from the original forecast key figure (OFKF)
3) add to value of step 2) the value of previous time bucket of the time integrated forecast key figure (TIFKF); in the case of the first time bucket in step 2) the value of the TIFKF is taken to be zero
4) write the sum of step 3) for the same CVC and time bucket as read in step 2) to the TIFKF
5) go to step 2) for the next time bucket, if the last time bucket is reached start at step 1) for the next CVC.
Once the last CVC is reached, step 6, the process ends, step 7.

In this way, it is possible to calculate the original TIFKF and then the availability checks are done with respect to this key figure in a manner similar to the conventional logic of the quotation component. If the OFKF is changed the TIFKF is recalculated taking into account the already confirmed products from successful availability checks. This problem also appears in the standard Quotation component and the solution used there, introducing a new key figure for recording the confirmed quantities, can be applied to the suggested process, too. For simplicity, we will consider the time integrated availability key figure, TIAKF, which at the beginning is equal to the TIFKF but is reduced by the successful availability checks.

Whilst, the availability check and the reduction of the TIAKF are more complex than in the conventional Quotation logic, the advantages are that false negative availability checks are avoided. In further embodiments of the invention, the following steps may be performed in order to guarantee a consistent availability check procedure: first, the TIAKF has to be reduced for the checked CVC for the checked date and for all the following time buckets of the checked date so that its availability does not falsely appear at a later point of time. If this is not possible because the value for the CVC is already zero in a following time bucket the temporary availability has to be taken back for the checked date and the check has to be continued for a later date than the zero value date. Such a later zero value date reflects the fact that at least one of the components described by the CVC is "available" at an earlier date but has been used already for a different availability confirmation before the present one. And, of course, it is not intended to take back the already issued confirmation for a different sales order only because the new request is closer to the procurement time of the components.

The described procedure is independent of the way the CVC are technically represented in the Demand Planning component. The advantage of the described procedure being independent of the way the CVC are technically represented in the Demand Planning component is that within the CBF scenario there are different possibilities how the characteristics are represented with internal CVC. It is noted that the expression CVC is intended to cover two different meanings: on the one hand, an application CVC may represent the evaluation of a configurable product and contains the characteristics, such as engine, edition and the like; on the other hand, a technical CVC which is mentioned in the above calculation procedure of the TIFKF is the CVC with technical characteristics for planning profile, planning table and planning table row. In CBF the profile specifies the relation between application characteristics and technical characteristics by combining them in the planning table. For example, the profile may contain independent application characteristics and dependent application characteristics. If all the characteristics are dependent, i.e. contained in one planning table and the planning table is the only one in the profile, there is a one to one relation between the application and technical CVC. In the case of independent characteristics, i.e. each characteristic is in a different planning table of the profile, the value for the application CVC is calculated dynamically from the technical CVC. It is also possible to have dependent and independent characteristitics on one profile by using planning tables which combine some of the application characteristics. However, it is important that the profile is defined in such a way that the component structure of the configurable product is modelled correctly. This means that each row of the planning tables in the profile represents one component product. The planning tables may combine one or more application characteristics but each one should represent an assembly group and a row should represent a component of the assembly group. Such a definition rule for CBF profiles is useful for planning configurable products and their components. If the rule is followed the availability check as well as the reduction of the TIAKF can be accomplished independently of how the technical CVC are related to the evaluation CVC.

It is worthwhile to note that from a business point of view the TIAKF reflects in the CVC the number of available components which are either procured in the respective time bucket or which have been procured before and are still in store. In other words the TIAKF represents the enhanced number of producible variants of the finished product by taking also previously procured components into account - even if they were planned to be used for a different finished product. It is to be understood that the difference between the TIAKF and the standard forecast key figure is that for the TIAKF the characteristics represent less an attribute of the product, for example, the car, but rather a component of the product.

In order to further exemplify the invention, the example given above of the two days of next week, is referred to again. Assuming that the earlier of the two day is the first time bucket of the forecast period, the TIAKF contains for the earlier day no car with 90HP but one with 120HP and one car with standard edition but not with luxury edition. For the next day there are two cars with 90HP and one car with 120HP from the day before as well as one car with standard edition from the day before and two cars with luxury edition. This means that for the second day that two 90HP engine components and one standard edition component is available and that they can be combined for a car with 90HP and standard edition. Therefore, according to the invention, an availability check with respect to the TIAKF would give a positive result on the second day, as intended according to the invention.

It is noted that there are different kinds of availability checks. Further, other availability checks may check also with respect to the components, e.g. reservation planning. In order to carry out such checks, the explosion of the bill of material, BOM, of the finished product is generally required. The BOM establishes the relation between the components and the evaluation of the configurable product with the aid of object dependencies. However, the BOM explosion requires more time, is much more complicated to set up and maintain and also to use in an availability check. In contrast to this, according to an embodiment of the present invention, the availability check uses the forecast which is already created to perform an efficient and reliable check.

In a further embodiment, the TIFKF calculation part of the implementation may be done in a program and this program may be executable using a standard Demand Planning macro. In this way, the execution of the calculation can be easily triggered every time the OFKF is changed by the user in the interactive Demand Planning as well as when the OFKF is recalculated in a batch job. For the TIAKF reduction calculation the process of the availability check can be modified directly.

According to an embodiment of the present invention, there is provided a method of performing an availability check for a product to determine whether the product is available for a customer at a predetermined time, the method comprising: providing a processor device; storing an original forecast for a period of time up to and including the predetermined time; determining a time integrated forecast value for the original forecast; using the time integrated forecast values in the availability check.

In a further embodiment, the time integrated forecast value comprises the sum of products together with a characteristic value combination for each product, which are available at the predetermined time and during the period of time up to and including the predetermined time. In a further embodiment, the time integrated forecast value is a key figure. In a yet further embodiment, the determining is carried out for a series of time buckets, wherein a time bucket defines a period of time. Examples of time buckets include, days, weeks, months, hours. The invention is not limited with respect to a particular time bucket. In a further embodiment, the original forecast includes a characteristic value combination which defines the product. In a further embodiment, the original forecast includes a value for each time bucket; the determining includes: starting with an earliest time for the original forecast, and adding to the values of the original forecast for the predetermined time, the values of a previous time bucket of the key figure for each characteristic value combination separately.

The invention as described can be implemented in digital electronic circuitry, or in computer hardware, firmware, software, or in combination thereof. An apparatus according to the present invention can be implemented in a computer program product tangibly embodied in a machine readable storage device for execution by a programmable processor; and method steps of the invention can be performed by a programmable processor executing a program of instructions to perform functions of the invention by operating on input data and generating output. The invention can be implemented in one or more computer programs that are executable on a programmable system including at least one programmable processor coupled to receive data and instructions from, and to transmit data and instructions to, a data storage system, at least one input device, and at least one output device. Each computer program can be implemented in a high-level procedural or object-oriented programming language, or in assembly or machine language if desired; and in any case, the language can be a compiled or interpreted language. Suitable processors include, by way of example, both general and special purpose microprocessors. Typically, a processor will receive instructions and data from a read-only memory and/or a random access memory. Typically, a computer will include one or more mass storage devices for storing data files; such devices include magnetic disks, such as internal hard disks and removable disks; magneto-optical disks; and optical disks. Storage devices suitable for tangibly embodying computer program instructions and data include all forms of nonvolatile memory, including by way of example, semiconductor memory devices, such as EEPROM, and flash memory devices; magnetic disks such as internal hard disks and removable disks; magneto-optical disks; and CD-ROM disks. Any of the foregoing can be supplemented by, or incorporated in ASICs (application specific integrated circuits).
To provide for interaction with a user, the invention can be implemented on a computer system having a display device such as a monitor or LCD screen for displaying information to the user and a keyboard and a pointing device such as a mouse or a trackball by which the user can provide input to the computer system. The computer system can be programmed to provide a graphical user interface through which computer programs interact with users.

Whilst specific embodiments of the invention have been described above, it will be appreciated that the invention may be practiced otherwise than as described. The description is not intended to limit the invention. For example, the order steps be performed of the present invention is not limited to that order prescribed in the claims. It should further be noted that the above-mentioned embodiments illustrate rather than limit the invention, and that those skilled in the art will be able to design alternatives without departing from the scope of the appended claims.
In the claims, any reference signs placed between parentheses shall not be construed as limiting the claim. The word 'comprising' does not exclude the presence of other elements or steps than those listed in a claim. The word 'a' is used as an equivalent of'one or more' or 'at least one'.

## Claims

1. A method of performing an availability check for a product to determine whether the product is available for a customer at a predetermined time, the method comprising:
providing a processor device;
storing an original forecast for a period of time up to and including the predetermined time;
determining a time integrated forecast value for the original forecast;
using the time integrated forecast values in the availability check.

2. A method according to claim 1, wherein the time integrated forecast value comprises the sum of products together with a characteristic value combination for each product, which are available at the predetermined time and during the period of time up to and including the predetermined time.

3. A method according to either claim 1 or claim 2, wherein the time integrated forecast value is a key figure.

4. A method according to any of the preceding claims 1-3, wherein the determining is carried out for a series of time buckets, wherein a time bucket defines a period of time.

5. A method according to any of the preceding claims, wherein the original forecast includes a characteristic value combination which defines the product.

6. A method according to claim 5 when dependent on claim 4, wherein the original forecast includes a value for each time bucket; the determining includes:
starting with an earliest time for the original forecast, and adding to the values of the original forecast for the predetermined time, the values of a previous time bucket of the key figure for each characteristic value combination separately.

7. A method according to any of the preceding claims 1-6, including the steps of:
a) taking a predetermined characteristic value combination, which defines the product,
b) reading the value for the predetermined characteristic value combination for a first time bucket of the forecasting period from the original forecast key figure,
c) adding to the value of step b), the value of a previous time bucket of the time integrated forecast key figure, if the previous time bucket is the first time bucket, the value of the time integrated forecast key figure is set at zero,
d) writing the sum of step c) for the predetermined characteristic value combination and the time bucket as read in step b) to the time integrated forecast key figure,
e) go to step b) for a next time bucket, if the last time bucket is reached start at step a) for a next predetermined characteristic value combination.

8. A computer system for performing an availability check for a product to determine whether the product is available for a customer at a predetermined time, the system comprising:
a processor device arranged to receive and process data relating to the product, a storage element for storing an original forecast for a period of time up to and including the predetermined time, and
a determining module, wherein, in response to the determining module, the processor is arranged to determine a time integrated forecast value for the original forecast, and wherein, in response to a user action, the processor device is arranged to perform the availability check on the basis of the time integrated forecast values.

9. An availability check apparatus for performing an availability check for a product to determine whether the product is available for a customer at a predetermined time, the apparatus comprises a storage medium having recorded therein processor readable code processable to perform the availability check, the processor readable code comprising storing code for storing an original forecast for a period of time up to and including the predetermined time, and determining code for determining a time integrated forecast value for the original forecast, wherein in response to the determining code, the apparatus is arranged to perform the availability check on the basis of the time integrated forecast values.

10. A user terminal comprising means operable to perform the method of any of claims 1-7.

11. A program storage device readable by a processing apparatus, said device embodying a program of instructions executable by the processor to perform the steps of any one of claims 1-7.
